# EUROPÄISCHE PATENTSCHRIFT

(11) **EP 0 759 528 B1**
(45) Veröffentlichungstag und Bekanntmachung des Hinweises auf die Patenterteilung: **03.03.1999**
(21) Anmeldenummer: 96890074.6
(22) Anmeldetag: 24.04.1996
(51) Int. Cl.: F24H 8/00, F24H 1/48, F24H 1/20

(54) **Heizkessel**
Boiler
Chaudière

(30) Priorität: 22.08.1995 AT 1413/95
(43) Veröffentlichungstag der Anmeldung: 26.02.1997
(73) Patentinhaber: MONTFORT BETEILIGUNGSGESELLSCHAFT m.b.H., A-1141 Wien (AT)
(72) Erfinder: Phillipp, Thomas, Dipl.-Ing., 7033 Pöttsching (AT); Huber, Walter, Dipl.-Ing. Dr. mont., 1030 Wien (AT)
(74) Vertreter: Hübscher, Heiner, Dipl.-Ing.

(56) Entgegenhaltungen:
- EP-A- 0 008 568
- DE-A- 4 311 004
- DE-U- 8 510 099

## Beschreibung

Die Erfindung bezieht sich auf einen Heizkessel zur Bereitung von Brauchwarmwasser und zur Aufheizung eines Heizmediums, mit einem eine untere Kaltwasserzu- und eine obere Warmwasserableitung aufweisenden brennerbestückten Brauchwasserspeicher und einem über eine Kreislaufleitung an den Brauchwasserspeicher angeschlossenen Brauchwasser-Heizmedium-Wärmetauscher einer Heizungsanlage.

Heizkessel für den Betrieb von Zentralheizungen und die Bereitung von Brauchwarmwasser werden üblicherweise in Einfamilienhäusern oder entsprechenden Wohnungen eingesetzt, wobei die Warmwasserbereitung meist nach dem Prinzip des Durchlauferhitzers erfolgt und daher die Brennerleistung auch auf die Wärmebedarfsabdeckung der Warmwasserbereitung auszulegen ist. Diese hohen Leistungen sind für den Heizbetrieb der heute gut isolierten Wohnungen und Einfamilienhäuser unnötig, so daß es zwangsläufig zu einem Taktbetrieb mit relativ vielen Brennerstarts und entsprechend kurzen Brennerlaufzeiten kommt, was zu höheren Schadstoffemissionen gegenüber einem Stationärbetrieb und zu hohen Brennerbelastungen führt. Eventuell vorgesehene Warmwasserspeicher sind nur klein bemessen und dienen lediglich beim Zapfvorgang zur Überbrückung der Aufwärmzeit durch den Durchlauferhitzer, damit an der Zapfstelle sofort Brauchwarmwasser zur Verfügung steht. Gemäß der DE-A 43 11 004 kann auch der den Durchlauferhitzer bildende Wärmetauscher wahlweise mit einer Brauchwasserzapfstelle oder dem Primärkreis eines der Heizanlage zugeordneten Wärmetauschers verbunden werden, um längere Brennerlaufzeiten und höhere Wirkungsgrade zu erreichen, doch wird dabei ein recht aufwendiger Umwälzbetrieb des über den Wärmetauscher aufzuwärmenden Wassers in Kauf genommen und kaum eine wirkliche Verbesserung erreicht. Auch die vorgeschlagene Möglichkeit, einen Sturzbrenner zum Betrieb des Durchlauferhitzers einzusetzen und die Restwärme der Abgase durch einen Abgaswärmetauscher zu nutzen, bringt wenig Erfolg, da der bis in den oberen Abzapfbereich des an den Durchlauferhitzer angeschlossenen Übergangs speichers hochreichende Abgaswärmetauscher zu einer Rückkühlung des erwärmten Wassers führt.

Gemäß der DE-A 33 40 022 wurde auch schon ein Heizkessel vorgeschlagen, der einen brennerbestückten Brauchwarmwasserspeicher aufweist, wobei der Wärmespeicher der zugehörigen Heizungsanlage über einen Kreislauf an den Brauchwasserspeicher angeschlossen und vom Brauchwarmwasser beaufschlagt wird. Hier ergibt sich zwar ein rationelles Funktionsprinzip, da die Vorteile eines echten Brauchwasserspeichers durch seine Pufferwirkung gegenüber einem Durchlauferhitzer genutzt werden können, doch wird hier ein bodenseitiger Brenner eingesetzt, der keinen Brennwertbetrieb erlaubt und daher hinsichtlich des Wirkungsgrades unbefriedigend bleibt.

Der Erfindung liegt daher die Aufgabe zugrunde, diese Mängel zu beseitigen und einen Heizkessel der eingangs geschilderten Art zu schaffen, der sich bei verhältnismäßig aufwandsarmem Aufbau durch seinen hohen Wirkungsgrad und seine Wirtschaftlichkeit bei einwandfreien Betriebsbedingungen auszeichnet.

Die Erfindung löst diese Aufgabe dadurch, daß der Brauchwasserspeicher mit einem Sturzbrenner ausgestattet ist, dessen von oben nach unten durch den Brauchwasserspeicher führendes Flammrohr im Bodenbereich des Brauchwasserspeichers über einen brauchwassergekühlten Kondensator in ein Abgasrohr übergeht. Durch diese einfache Maßnahme entsteht ein optimal arbeitender Brennwertkessel, bei dem zusätzlich zur fühlbaren Wärme des im Brenner verbrannten Brennstoffes großteils auch die Verdampfungswärme des zu Wasserdampf verbrannten Wasserstoffanteiles des Brennstoffes bei der Kondensation im Kondensator genutzt wird. Dieser im Bodenbereich des Brauchwasserspeichers angeordnete Kondensator bietet dabei auf rationelle und platzsparende Weise die erforderlichen großen Wärmetauscherflächen und die tiefen Kühltemperaturen auf Grund der hier gegebenen Bedingungen durch das zufließende Kaltwasser, so daß ein überraschend hoher Wirkungsgrad erzielt werden kann. Dabei hilft die Pufferwirkung des Brauchwasserspeichers, mit geringen Brennerleistungen das Auslangen zu finden, womit nicht nur die Wirtschaftlichkeit des Heizkessels verbessert wird, sondern vor allem auch hinsichtlich der Schadstoffemissionen ausreichend lange Brennerlaufzeiten und wenig Brennerstarts erreicht werden. Neben der Reduktion der Schadstoffemissionen bedeutet dies außerdem eine geringere Materialbelastung der Gerätebauteile durch weniger Lastspiele. Darüber hinaus wird der Brenner immer mit der gleichen Leistung betrieben, so daß die verbrennungstechnischen Parameter in diesem speziellen Betriebspunkt ohne Schwierigkeiten optimiert werden können, was wiederum zu einer weiteren Verringerung der Schadstoffemissionen führt und eine Wirkungsgradverbesserung durch minimalen Luftüberschuß ermöglicht.

Eine zweckmäßige Konstruktion entsteht, wenn der Kondensator aus einem bodenseitig am Brauchwasserspeicher angesetzten Topf besteht, in den das Flammrohr mündet und von dem aus das Abgasrohr ausgeht, wobei der Topf einen in eine untere Sammelwanne hineinragenden Kondensatauslaß aufweist. Topf und Sammelwanne können aus einfachen Formstücken vorgefertigt und dann am Brauchwasserspeicher befestigt werden, und der Kondensatauslaß innerhalb der Wanne ergibt dabei gleich einen siphonartigen Abschluß des Topfes. Die freiwerdende Kondensatwärme wird unmittelbar über die Bodenfläche des Brauchwasserspeichers an das Brauchwasser übertragen, wobei im Bodenbereich die geringsten Brauchwassertemperaturen herrschen und hier daher auch die für den Wirkungsgrad entscheidenden größten Temperaturdifferenzen zwischen Kühl temperaturen und Abgastemperaturen verfügbar sind.

Eine weitere Verbesserung der wärmetechnischen Verhältnisse und des Wirkungsgrades lassen sich dadurch erzielen, daß in das Abgasrohr nach dem Kondensator ein Wärmetauscher zur Vorwärmung der Verbrennungsluft für den Sturzbrenner eingebunden ist, so daß die Verbrennungsluft vorgewärmt wird und die Abgas-Abwärme weiter genutzt werden kann. Als Wärmetauscher genügen dabei einfache Rohrwärmetauscher, die eine Führung der Zuluft entlang des Abgasrohres mit sich bringen.

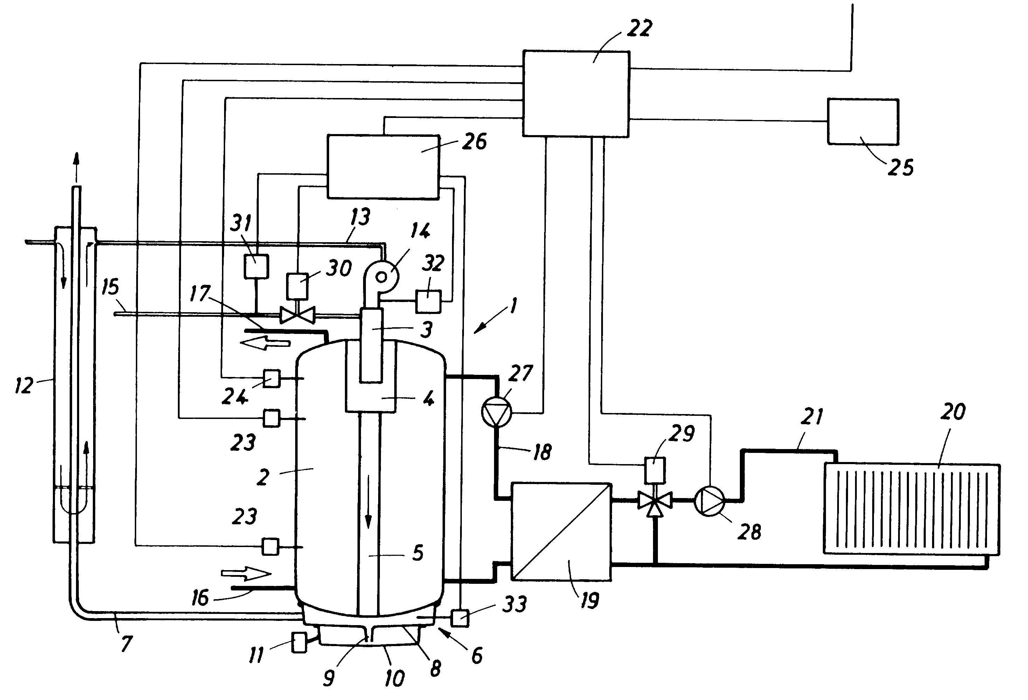

In der Zeichnung ist ein erfindungsgemäßer Heizkessel an Hand eines Anlagenschemas näher veranschaulicht.

Der dargestellte Heizkessel 1 weist einen Brauchwasserspeicher 2 in Form eines brennerbestückten, stehenden Druckbehälters auf, wobei der Brenner, beispielsweise ein Gasbrenner, als Sturzbrenner 3 in einer koaxialen oberen Brennkammer 4 mit von oben nach unten verlaufendem Flammrohr 5 angeordnet ist. Das Flammrohr 5 kann dabei als Rohrbündel hergestellt sein oder auf andere geeignete Weise entsprechende Nachschaltheizflächen für den Speicherinhalt bilden. Im Bodenbereich des Speichers 2 mündet das Flammrohr 5 in einen Kondensator 6, von dem eine Abgasleitung 7 ausgeht. Dieser Kondensator 6 besteht aus einem Topf 8 mit einem Kondensatauslaß 9, der in eine nachgeordnete Sammelwanne 10 für das Kondensat hineinragt. Ein Kondensatabgang 11 sorgt dann mittels einer nicht weiter dargestellten Pumpe für eine periodische Entleerung des Sammelbehälters.

Das Abgasrohr 7 ist nach dem Kondensator 6 in einen Rohrwärmetauscher 12 eingebunden, über den die Zuluftleitung 13 für den Sturzbrenner 3 führt, so daß es zu einer Vorwärmung der Verbrennungsluft kommt. Die Zuluftleitung 13 schließt saugseitig an ein Verbrennungsluftgebläse 14 für den über eine Gasleitung 15 brennstoffversorgten Sturzbrenner 3 an.

In den Brauchwarmwasserspeicher 2 mündet im Bodenbereich eine Kaltwasserzuleitung 16 und vom Deckenbereich des Speichers geht eine Warmwasserableitung 17 aus, die zu den verschiedenen, nicht weiter dargestellten Zapfstellen führt. Außerdem ist am Brauchwarmwasserspeicher 2 über eine Kreislaufleitung 18 ein Brauchwasser-Heizmedium-Wärmetauscher 19 einer Heizanlage 20 angeschlossen, die lediglich über einen Heizkreis 21 angedeutet ist.

Eine Steuerungseinrichtung 22 überwacht und steuert den Heizkessel 1, welche Steuerungseinrichtung 22 mit Temperaturfühlern 23 für das Speicherwasser, einem Sicherheitstemperaturbegrenzer 24 im Deckenbereich des Speichers und einem Raumthermostat 25 sowie ausgangsseitig mit dem Feuerungsautomaten 26, der Umwälzpumpe 27 der Kreislaufleitung 18 und den Umwälz- und Regelungseinrichtungen 28, 29 des Heizkreises 21 in Verbindung steht. Der Feuerungsautomat 26 seinerseits steuert ein Mengenventil 30 der Brennstoffzufuhrleitung 15, das Gebläse 14 sowie die Zündeinrichtung des Brenners an und überwacht den Verbrennungsablauf mit Gasdruckwächtern 31, Luftdruckwächtern 32, Abgastemperaturwächtern 33 u. dgl., so daß ein vollautomatischer Betrieb gewährleistet ist.

Der Heizkessel 1 erlaubt es, im Brennwertverfahren Brauchwasser im Brauchwasserspeicher 2 zu erwärmen, wobei die fühlbare Wärme des Brennstoffes über die Brennkammer 4 und das Flammrohr 5 den Flammen bzw. Brenngasen des im Brenner verbrannten Brennstoffes entzogen und an das Brauchwasser abgegeben wird. Im bodenseitigen Kondensator 6 wird dann den Abgasen noch die Verdampfungswärme entzogen, indem die Abgase unter den Taupunkt abgekühlt werden, wobei die Kaltwasserzulauftemperaturen in diesem Bereich für die gewünscht tiefen Kühltemperatur sorgen. Die restliche Abwärme der Abgase wird dann noch im Abgas-Verbrennungsluftwärmetauscher 12 zur Verbrennungsluftvorwärmung genutzt, so daß beste Wirkungsgrade zu erreichen sind. Mit dem Kreislauf 18 wird bedarfsweise durch das warme Brauchwasser der Wärmetauscher 19 der Heizanlage 20 beaufschlagt und auf rationelle Weise über das Brauchwarmwasser eine Heizungsanlage betrieben.

Aufgrund der in Relation zu einem üblichen Kesselwasserinhalt großen Pufferwirkung des Brauchwasserspeichers sind für die Brauchwasser- und Heizungsmediumerwärumung nur geringere Brennerleistungen erforderlich, womit entsprechend lange Brennerlaufzeiten verbunden sind.

Ein übliches Einfamilienhaus mit ca. maximal 150m² Wohnfläche, dessen Wärmedämmung nicht mehr dem Stand der Technik entspricht, hat eine Heizlast in der Größenordnung von 15 kW und mehr. Die erforderliche maximale Brennerleistung liegt noch höher, wenn die Brauchwassererwärmung im Durchlaufverfahren erfolgt (Größenordnung 20 bis 24 kW). Die Brennerlaufzeiten können auch bei modulierendem Betrieb sehr kurz werden (kleine Warmwasserzapfmengen).

Der erfindungsgemäße Heizkessel geht von einer Gebäudewärmedämmung aus, die dem Stand der Technik entspricht und schon vielerorts realisiert ist bzw. die durch schon erlassene oder zukünftige Vorschriften im Sinne der Energieeinsparung zwingend notwendig wird. Die Heizlast eines Gebäudes oben genannter Ausmaße liegt dann in einer Größenordnung von 6 bis 10 kW und die Brennerleistung des erfindungsgemäßen Heizkessels entspricht somit der Heizlast des Gebäudes ohne wesentlichen Zuschlag für die Brauchwassererwärmung, wobei der Brauchwasserspeicher (Speichervolumen ca. 200 bis 300 1) mit der relativ geringen Brennerleistung bei entsprechend langen Brennerlaufzeiten erwärmt wird.

Wesentlich dabei ist zusätzlich zum Puffereffekt die optimale Brennwerttechnik, wozu der Kondensator mit den tiefstmöglich zur Verfügung stehenden Wassertemperaturen des Kaltwasserzulaufs bzw. der unteren Kaltwasserschichten im Speicher beaufschlagt wird. Weiters ermöglicht die im Vergleich zu üblichen Heizkesseln reduzierte Brennerleistung einen nachgeschalteten leistungsfähigen Abgas/Luft-Wärmetauscher einfacher Bauart, der die Abgastemperatur weiter senkt und den Kesselwirkungsgrad erhöht.

## Patentansprüche

1. Heizkessel (1) zur Bereitung von Brauchwarmwasser und zur Aufheizung eines Heizmediums, mit einem eine untere Kaltwasserzu- und eine obere Warmwasserableitung (16, 17) aufweisenden brennerbestückten Brauchwasserspeicher (2) und einem über eine Kreislaufleitung (18) an den Brauchwasserspeicher (2) angeschlossenen Brauchwasser-Heizmedium-Wärmetauscher (19) einer Heizungsanlage (20), dadurch gekennzeichnet, daß der Brauchwasserspeicher (2) mit einem Sturzbrenner (3) ausgestattet ist, dessen von oben nach unten durch den Brauchwasserspeicher (2) führendes Flammrohr (5) im Bodenbereich des Brauchwasserspeichers (2) über einen brauchwassergekühlten Kondensator (6) in ein Abgasrohr (7) übergeht.

2. Heizkessel nach Anspruch 1, dadurch gekennzeichnet, daß der Kondensator (6) aus einem bodenseitig am Brauchwasserspeicher (2) angesetzten Topf (8) besteht, in den das Flammrohr (5) mündet und von dem aus das Abgasrohr (7) ausgeht, wobei der Topf (8) einen in eine untere Sammelwanne (10) hineinragenden Kondensatauslaß (9) aufweist.

3. Heizkessel nach Anspruch 1 oder 2, dadurch gekennzeichnet, daß in das Abgasrohr (7) nach dem Kondensator (6) ein Wärmetauscher (12) zur Vorwärmung der Verbrennungsluft für den Sturzbrenner (3) eingebunden ist.

## Claims

1. A heating boiler (1) for the preparation of service hot water and for heating up a heating medium, comprising a burner-equipped service water storage tank (2) which has a bottom cold-water inlet line and a top hot-water outlet line (16, 17), and a service water and heating medium heat exchanger (19) which forms part of a heating installation (20) and which is connected to the service water storage tank (2) via a circulation line (18), characterised in that the service water storage tank (2) is equipped with a reverberatory burner (3), whose flame tube (5) extending down from above through the service water storage tank (2) merges, in the bottom zone of the service water storage tank (2), into a flue gas pipe (7) via a service water cooled condenser (6).

2. A heating boiler according to claim 1, characterised in that the condenser consists of a can (8) which is attached to the service water storage tank (2) at the base and into which the flame tube (5) leads and from which the flue gas pipe (7) extends, the can (8) having a condensate outlet (9) which projects into a bottom collecting trough (10).

3. A heating boiler according to claim 1 or 2, characterised in that the flue gas pipe (7) after the condenser (6) contains a heat exchanger (12) for preheating the air for combustion for the reverberatory burner (3).

## Revendications

1. Chaudière (1) pour la préparation d'eau chaude industrielle et pour le chauffage d'un fluide de chauffage, avec un accumulateur d'eau industrielle (2), équipé d'un brûleur, présentant une conduite d'amenée d'eau froide inférieure et une conduite d'évacuation d'eau chaude supérieure (16, 17) et un échangeur de chaleur eau industrielle-fluide de chauffage (19) d'une installation de chauffage (20), raccordé à l'accumulateur d'eau industrielle (2) par l'intermédiaire d'une conduite de circuit (18), caractérisée par le fait que l'accumulateur d'eau industrielle (2) est équipé d'un brûleur (3) vertical à flamme vers le bas, dont le tube de flamme (5), assurant le guidage depuis le haut vers le bas, à travers l'accumulateur d'eau industrielle (2), se transforme, dans la zone de fond de l'accumulateur d'eau industrielle (2), en un tube de gaz de fumées (7), par l'intermédiaire d'un condenseur (6) refroidi par de l'eau industrielle.

2. Chaudière selon la revendication 1, caractérisée par le fait que le condenseur (6) est constitué d'un pot (8) placé côté fond sur l'accumulateur d'eau industrielle (2), pot dans lequel débouche le tube de flamme (5) et d'où part le tube de gaz de fumées (7), le pot (8) présentant une évacuation de condensat (9) pénétrant dans une auge collectrice inférieure (10).

3. Chaudière selon la revendication 1 ou 2, caractérisée par le fait que dans le tube de gaz de fumées (7) est intégré, après le condenseur (6), un échangeur de chaleur (12) destiné à assurer le préchauffage de l'air de combustion destiné au brûleur (3) vertical à flamme vers le bas.
